Europäisches Patentamt

**European Patent Office**

Office européen des brevets

(19)

(11) Veröffentlichungsnummer: **0 036 658**
**B1**

(12) **EUROPÄISCHE PATENTSCHRIFT**

(45) Veröffentlichungstag der Patentschrift:
23.01.85

(51) Int. Cl.⁴: **G 01 F 1/66**

(21) Anmeldenummer: 81102178.1

(22) Anmeldetag: 23.03.81

(54) Ultraschall-Messgerät zur Bestimmung der Strömung eines Mediums in einer Leitung.

(30) Priorität: 25.03.80 JP 37842/80
25.03.80 JP 37843/80
25.03.80 JP 37907/80
25.03.80 JP 37908/80

(43) Veröffentlichungstag der Anmeldung:
30.09.81 Patentblatt 81/39

(45) Bekanntmachung des Hinweises auf die Patenterteilung:
23.01.85 Patentblatt 85/4

(84) Benannte Vertragsstaaten:
DE NL

(56) Entgegenhaltungen:
CH - A - 446 741
US - A - 3 580 092
US - A - 3 987 674

(73) Patentinhaber: FUJI ELECTRIC CO. LTD., 1-1,
Tanabeshinden, Kawasaki-ku, Kawasaki 210 (JP)

(72) Erfinder: Shinkai, Kazuteru, No. 528, Ogura, Saiwai-ku
Kawasaki-shi, Kanagawa (JP)
Erfinder: Kohno, Masaru, No. 1-18, Asahigaoka 4-chome
Hino-shi, Tokyo (JP)
Erfinder: Nakagawa, Yukio, No. 13-3,
Tamadaira 6-chome Hino-shi, Tokyo (JP)
Erfinder: Tamaoki, Norimasa, No. 23-34,
Higashimoto-machi 1-chome Kokubunji-shi, Tokyo (JP)
Erfinder: Saito, Kiyoshi, No. 15-3, Saiwai-chi 4-chome
Tachikawa-shi, Tokyo (JP)

(74) Vertreter: Mehl, Ernst, Dipl.-Ing. et al, Postfach 22 01 76,
D-8000 München 22 (DE)

## Beschreibung

Die Erfindung bezieht sich auf ein Ultraschall-Meßgerät zur Bestimmung der Strömung eines Mediums in einer Leitung mit einer außen an der Leitung montierbaren Baueinheit mit einer ersten Ultraschall-Wandlereinrichtung und einer zweiten Ultraschall-Wandlereinrichtung, wobei die Baueinheit mindestens ein Paar von die Ultraschall-Wandlereinrichtungen tragenden Befestigungsteilen enthält, wobei ferner jede Ultraschall-Wandlereinrichtung aus einem keilförmigen Schuh und einem daran befestigten Ultraschall-Wandler in einer derartigen Anordnung an dem betreffenden Befestigungsteil besteht, daß die Ausbreitung der Ultraschallwelle jeweils entlang einer dem betreffenden Ultraschall-Wandler zugeordneten zentralen Achse Schräg zur Mittenachse der Leitung erfolgt, und wobei die Befestigungsteile mit den Ultraschall-Wandlereinrichtungen an ihren der Leitung zugewandten Seiten so geformt sind, daß in der von den zentralen Achsen der Ultraschall-Wandler gebildeten Ebene auch die Mittenachse der Leitung liegt.

Bei einem bekannten Ultraschall-Meßgerät dieser Art (US-A-3 987 674) besteht die Baueinheit aus zwei Befestigungsteilen, die jeweils eine Ultraschall-Wandlereinrichtung aufweisen. Jedes Befestigungsteil ist für sich mit einem spannbaren Metallband an der Leitung befestigt. Miteinander sind die beiden Befestigungsteile über zwei stabförmige Abstandshalter verbunden. Zur Montage des bekannten Meßgerätes müssen mehrere Schraubverbindungen auf einander gegenüberliegenden und oft nur schwer zugänglichen Seiten hergestellt werden. Die Vielzahl der Montageöffnungen an den beiden Abstandshaltern begünstigt dabei eine unkorrekte Montage, bei der die beiden Ultraschall-Wandler nicht so zueinander ausgerichtet sind, daß eine ausreichend gute Empfindlichkeit und Genauigkeit der Messung sichergestellt ist. Die Montage und Justierung des bekannten Meßgerätes ist also sehr umständlich.

Dies ist insbesondere deshalb nachteilig, weil das Meßgerät meist nachträglich an eine bereits installierte Leitung während des Betriebs der Anlage angebracht werden muß, wobei dann die unter Umständen für den Arbeiter schädlichen Arbeitsbedingungen, wie hohe Temperaturen, giftige Gase oder Strahlungen eine schnelle Installation des Meßgerätes ohne komplizierte Einstellungsarbeiten erforderlich machen.

Es ist ferner ein Ultraschall-Meßgerät (DE-AS 24 61 403) bekannt, bei dem eine Baueinheit mit zwei Ultraschall-Wandlern mittels Rohrschellen an der Leitung befestigt ist. Das bekannte Meßgerät weist zwar den Vorteil einer einfachen und schnellen Montierbarkeit auf, stellt aber nicht sicher, daß seine beiden Ultraschall-Wandler zueinander und auch zur Leitung so ausgerichtet sind, daß eine ausreichend hohe Empfindlichkeit und Genauigkeit der Messung gewährleistet ist.

Der Erfindung liegt daher die Aufgabe zugrunde, ein Ultraschall-Meßgerät zur Bestimmung der Strömung eines Mediums in einer Leitung vorzuschlagen, das genau in seiner Lage bezüglich der Leitung und innerhalb einer kurzen Zeit von einem ungeübten Arbeiter an der Leitung befestigt werden kann.

Zur Lösung dieser Aufgabe nehmen die Befestigungteile die Leitung zwischen sich unter Bildung einer Schelle auf; die Befestigungsteile sind auf ihrer einen Seite scharnierartig miteinander verbunden und auf ihrer gegenüberliegenden anderen Seite miteinander verspannt.

Das erfindungsgemäße Ultraschall-Meßgerät hat den Vorteil, daß die als Sender und Empfänger dienenden Ultraschall-Wandler genau in eine vorgegebene Lage zueinander und zur Leitung angebracht sind, so daß eine genaue Messung der Strömungsmenge o. dgl. durchführbar ist. Dies ist darauf zurückzuführen, daß das gesamte Meßgerät eine scharnierartig zusammengehaltene Konstruktion darstellt, die eine genaue räumliche Zuordnung der beiden Ultraschall-Wandler bereits bei der Herstellung des Gerätes erlaubt. Ein zusätzlicher Vorteil ist darin zu sehen, daß das erfindungsgemäße Ultraschall-Meßgerät von einem ungeübten Arbeiter an der Leitung angebracht werden kann. Es ist nämlich keine aufwendige Einstellung notwendig, wenn das Meßgerät angebracht wird, weil die als Sender und Empfänger dienenden Ultraschall-Wandler bereits bei der Herstellung genau in ihrer Lage zueinander festgelegt sind und eine genaue Ausrichtung zur Leitung durch die Formgebung mindestens eines Befestigungsteiles erreicht ist. Die Befestigung des erfindungsgemäßen Meßgerätes kann daher in einfacher Weise durch Zusammenpressen der Befestigungsteile bewirkt werden. Es hat sich gezeigt, daß das erfindungsgemäße Ultraschall-Meßgerät an einer Leitung in etwa einer Minute angebracht werden kann.

Vorteilhafte Ausgestaltungen des erfindungsgemäßen Meßgerätes gehen aus den Unteransprüchen hervor.

Zur Erläuterung der Erfindung ist in

Fig. 1 ein Ausführungsbeispiel in perspektivischer Darstellung in an der Leitung befestigtem Zustand, in

Fig. 2 eine Seitenansicht, in

Fig. 3 eine Draufsicht, in

Fig. 4 ein Längsschnitt durch dasselbe Ausführungsbeispiel und in

Fig. 5 eine weitere Darstellung desselben Ausführungsbeispiels wiedergegeben; in

Fig. 6 ist ein weiteres Ausführungsbeispiel im Querschnitt, in

Fig. 7 ein zusätzliches Ausführungsbeispiel, in Fig. 8 eine weitere Ausführungsform, in den

Fig. 9 und 10 eine Draufsicht und ein Längsschnitt durch ein weiteres Ausführungsbeispiel, in den

Fig. 11 bis 14 ein weiteres Ausführungsbeispiel, in der

Fig. 15 weitere Ausgestaltungen der Befestigungsteile, in

Fig. 16 ein weiteres Ausführungsbeispiel im Längsschnitt, in

Fig. 17 ein zusätzliches Ausführungsbeispiel in einer Seitenansicht, in

Fig. 18 eine weitere Befestigungsmöglichkeit der Ultraschall-Wandlereinrichtungen, in

Fig. 19 eine Spannvorrichtung für die Befestigungsteile, in

Fig. 20 eine konstruktive Möglichkeit der Anpassung an unterschiedliche Durchmesser der Leitung, in

Fig. 21 eine weitere Möglichkeit zur Anpassung an unterschiedliche Leitungsdurchmesser, in den

Fig. 22 bis 25 ein weiteres Ausführungsbeispiel in verschiedenen Darstellungen, in

Fig. 26 eine Darstellung eines weiteren Ausführungsbeispiels, in

Fig. 27 ein weiteres Ausführungsbeispiel mit Veränderung des Abstandes zwischen den beiden Ultraschall-Wandlern, in

Fig. 28 ein zusätzliches Ausführungsbeispiel mit einer besonderen Halterung der Ultraschall-Wandlereinrichtungen, und in den

Fig. 29 bis 32 ein weiteres Ausführungsbeispiel des erfindungsgemäßen Meßgerätes in verschiedenen Darstellungen und in

Fig. 33 eine Seitenansicht eines weiteren Ausführungsbeispiels gezeigt.

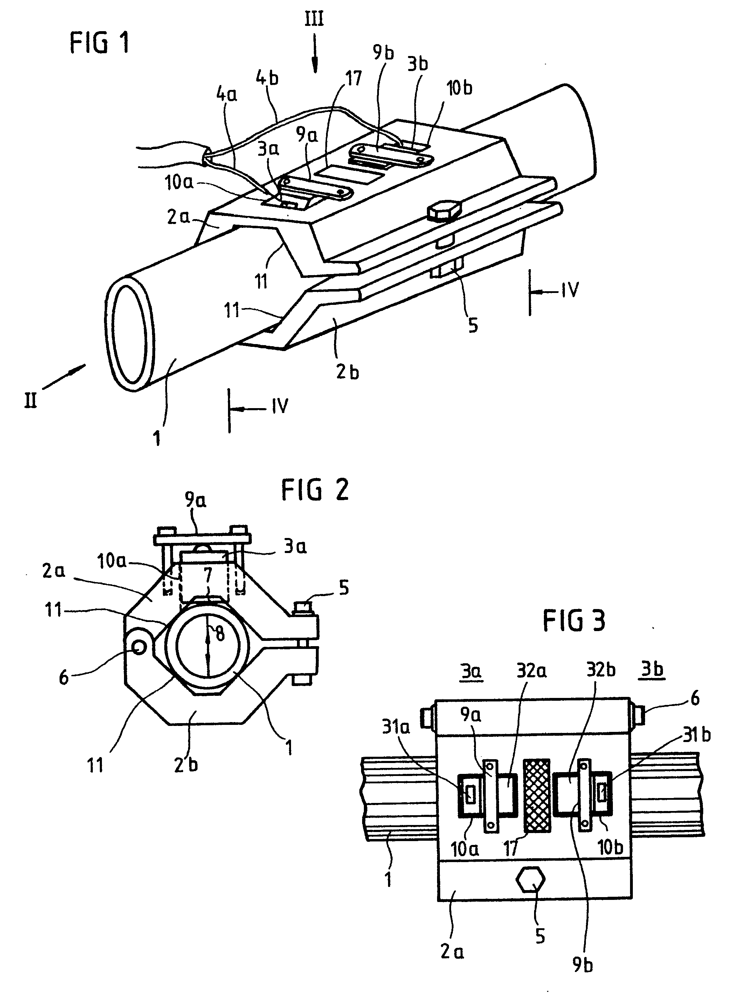

Das in den Fig. 1 bis 4 gezeigte Ausführungsbeispiel des Ultraschall-Meßgerätes ist zur Bestimmung der Menge einer Strömung in einer Leitung geeignet. Das Meßgerät enthält ein Paar Befestigungsteile 2a und 2b zur Anbringung eines Ultraschall-Senders (erste Ultraschall-Wandlereinrichtung) 3a und eines Ultraschall-Empfängers (zweite Ultraschall-Wandlereinrichtung) 3b außen an einer Leitung 1, in der das zu messende Medium fließt. Die Befestigungsteile 2a und 2b sind mittels eines Stiftes 6 auf ihrer einen Seite scharnierartig miteinander verbunden. Zur Anbringung des Meßgerätes werden die Befestigungsteile auf ihrer der einen Seite gegenüberliegenden anderen Seite voneinander weg bewegt und danach unter Bildung einer Schelle die Leitung 1 zwischen sich aufnehmend durch einen Bolzen und eine Mutter 5 an der Leitung 1 befestigt. Die Befestigungsteile 2a und 2b sind auf ihrer der Leitung 1 zugewandten Seite im Hinblick auf die äußere Gestalt der Leitung 1 ausgebildet. Der Ultraschall-Sender 3a und der Ultraschall-Sender 3b sind in Durchgangsöffnungen 10a und 10b im einen Befestigungsteil 2a untergebracht und an die Leitung 1 mittels Druckelementen 9a und 9b gepreßt. Die Leitung 1, der Ultraschall-Sender 3a und der Ultraschall-Empfänger 3b sind miteinander über ein akustisches Kopplungsmedium 7, wie z. B. ein Fett, ein Epoxyd-Kleber oder eine Metallfolie, akustisch verbunden.

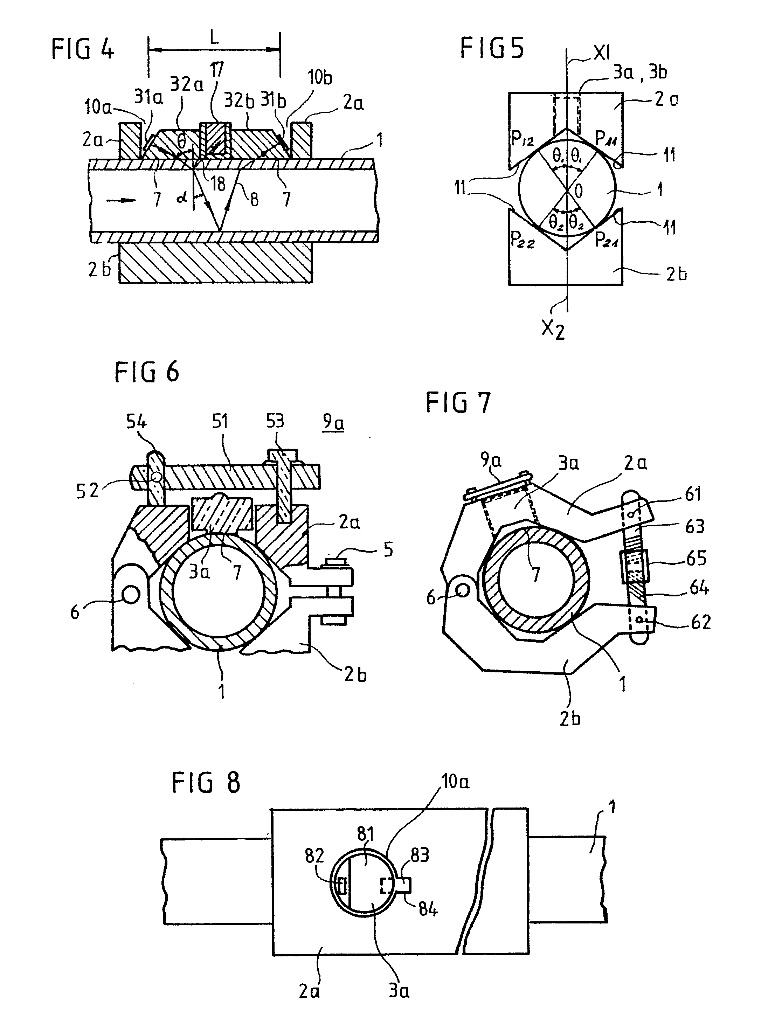

Der Ultraschall-Sender 3a enthält einen Ultraschall-Wandler 31a, um einen elektrischen Impuls einer Signalübertragungsleitung 4a in einen Ultraschall-Impuls umzusetzen; außerdem weist der Ultraschall-Sender 3a einen keilförmigen Schuh zur schrägen Einleitung der erzeugten Ultraschallwelle in die Strömung auf, die durch die Leitung 1 fließt. Der Grund für die schräge Einleitung der Ultraschallwelle besteht darin, daß, falls sie quer zur Strömungsrichtung erfolgen würde, kein Augangssignal erzeugt würde, das zur Messung der Strömungsmenge geeignet wäre. Entsprechend weist der Ultraschall-Empfänger 3b einen keilförmigen Schuh 32b und einen Ultraschall-Wandler 31b zur Umsetzung des empfangenen Ultraschallsignals in ein elektrisches Ausgangssignal auf. Das elektrische Ausgangssignal des Ultraschall-Wandlers 31b wird über eine Übertragungsleitung 4b übertragen. Die Ultraschallwelle bewegt sich demzufolge auf einen Weg 8, der sich diametral durch die Leitung 1 gemäß der Darstellung in Fig. 2 erstreckt und unter einem Winkel $\theta$ zur Mittenachse der Leitung 1 gemäß Fig. 4 verläuft, wobei der Weg 8 einen Brechungswinkel $\alpha$ in der Strömung hat.

Um diesen Verlauf 8 für die Ultraschallwelle zu erzielen, ist es wichtig, daß der Ultraschall-Sender 3a und der Ultraschall-Empfänger 3b genau zueinander ausgerichtet sind. Das bedeutet, daß sie voneinander und zueinander in vorgegebener Weise angeordnet sein müssen, da das Maß der Genauigkeit der Anbringung die Meßgenauigkeit bestimmt.

Durchgangsöffnungen 10a und 10b in dem einen Befestigungsteil 2a, die den Ultraschall-Sender 3a und den Ultraschall-Empfänger 3b aufnehmen, können so ausgestattet sein, daß sie den Ultraschall-Sender 3a und den Ultraschall-Empfänger 3b mit engem Spiel in ihrer Lage halten, wodurch ihre Lage auf der Leitung genau bestimmt ist. Somit ist der axiale Abstand L (siehe Fig. 4) zwischen dem Ultraschall-Sender 3a und dem Ultraschall-Empfänger 3b durch die Lage der Durchgangsöffnungen 10a und 10b bestimmt, die im Hinblick auf den Durchmesser der Leitung 1 angeordnet sind. Der Ultraschall-Sender 3a und der Ultraschall-Empfänger 3b sind so zur Leitung 1 ausgerichtet, daß eine ihre Achsen enthaltende Ebene auch eine Mittenebene der Leitung 1 darstellt, wenn das eine Befestigungsteil 2a an die Leitung 1 gepreßt ist.

Wie Fig. 5 zeigt, sind die Befestigungsteile 2a und 2b auf ihrer der Leitung 1 zugewandten Seite jeweils mit einer V-förmigen Ausnehmung versehen, die symmetrisch zu Mittenachsen $X_1$ und $X_2$ ausgeführt sind, wobei diese Mittenachsen durch den Ultraschall-Sender 3a und den Ultraschall-Empfänger 3b gehen; die Mittenachsen verlaufen auch im Weg der Ultraschallwelle, die vom Ultraschall-Sender 3a ausgesandt ist. Die V-förmigen Ausnehmungen sind durch Flächen 11 der Befestigungsteile gebildet, die Berührungsstellen $P_{11}$, $P_{12}$ sowie $P_{21}$, $P_{22}$ mit der Leitung 1 aufweisen. Die Mittenachsen $X_1$, $X_2$ gehen durch die Mittenachse 0 der Leitung 1. Um die Mittenachsen $X_1$ und $X_2$ auszurichten, ist es notwendig, daß die Befestigungsteile 2a und 2b parallel zueinander gehalten sind. Dies kann bei der Herstellung der Befestigungsteile 2a und 2b berücksichtigt werden. Die Befestigungsteile 2a und 2b können daher in einfacher Weise an der Leitung 1 unter genauer Ausrichtung von Ultraschall-Sender 3a zu Ultraschall-Empfänger 3b nur durch Verspannung mittels Bolzen und Mutter 5 befestigt werden.

Wie in Fig. 3 dargestellt ist, liegt zwischen dem Ultraschall-Sender 3a und dem Ultraschall-Empfänger 3b ein Ultraschall-Absorber 17, um zu verhindern, daß eine an der äußeren Wand der Leitung 1 reflektierte Ultraschallwelle 8 direkt den Ultraschall-Empfänger 3b ohne Durchlaufen der Strömung erreicht.

Fig. 6 zeigt ein Druckelement einer anderen Ausführungsform der Erfindung zur Halterung eines Ultraschall-Senders 3a. Der Sender 3a wird gegen die Leitung 1 beim Befestigen eines Druckelementes 51 mittels einer Schraube 53 gedrückt, wobei das Druckelement 51 an seinem einen Ende mittels eines Stiftes 52 gehalten ist, der in einem Stab 54 gelagert ist. Auf diese Weise kann sowohl der Ultraschall-Sender 3a als auch der Ultraschall-Empfänger 3b mit einer verhältnismäßig großen Kraft niedergedrückt werden, so daß eine akustische Kopplung unter Druck über eine Metallfolie erfolgt, die als akustisches Kopplungsmedium 7 dient. Sender und Empfänger können hohe Temperaturen von mehreren 100° C oder mehr aushalten. Eine nicht gezeigte Blattfeder kann dem Ultraschall-Sender 3a zugeordnet sein, um diesen in einer Richtung fort von der Leitung 1 zu halten, wenn kein Druck durch die Schraube 53 ausgeübt wird. Die Schraube 53 preßt den Ultraschall-Sender 3a gegen die Leitung 1 entgegen der Vorspannung der Blattfeder. Auf diese Weise kann das akustische Kopplungsmedium 7, das dem Ultraschall-Sender und -Empfänger zugeordnet ist, vor Schmutz, Abblättern oder Beschädigungen geschützt werden, bevor Sender und Empfänger an der Leitung 1 befestigt sind.

Fig. 7 zeigt eine Befestigungsvorrichtung, die an Stelle der Spannschraube mit Mutter 5 benutzt werden kann. Die Befestigungsteile 2a und 2b haben in diesem Falle Stifte 61 und 62, die durch Bolzen 63 und 64 miteinander verbunden sind. Diese Bolzen haben Rechts- und Linksgewinde. Die Bolzen 63 und 64 sind über eine Gewindemuffe 65 miteinander verbunden, wodurch ein Spannschloß gebildet ist. Wenn die Gewindemuffe 65 in dem einen Sinn gedreht wird, werden die Stifte 61 und 62 aufeinander zu bewegt, wodurch die Befestigungsteile 2a und 2b an der Leitung 1 befestigt werden.

Gemäß einer anderen Ausführung nach Fig. 8 hat der Ultraschall-Sender 3a eine zylindrische Gestalt mit einem Zapfenteil 83, das aus einer Seitenwand vorspringt. Eine Durchgangsöffnung 10a für den Ultraschall-Sender 3a ist entsprechend geformt und weist daher eine Nut 84 zur Aufnahme des Zapfenteils 83 auf. Wenn der Ultraschall-Sender 3a in die Durchgangsöffnung 10a eingeführt wird, greift das Zapfenteil 83 in die Nut 84 ein, wodurch der Ultraschall-Wandler 82 ausgerichtet wird. Eine so geformte Durchgangsöffnung kann verhältnismäßig einfach hergestellt werden.

Es ist verständlich, daß die Ausgestaltung des Befestigungsteiles im Hinblick auf die Anbringung des Ultraschall-Empfängers 3b in gleicher Weise ausgeführt ist.

Wenn das erfindungsgemäße Ultraschall-Meßgerät an Leitungen angebracht werden soll, die einen unterschiedlichen Durchmesser, eine unterschiedliche Wandstärke haben oder aus unterschiedlichem Material bestehen, ist es erforderlich, die Entfernung zwischen dem Ultraschall-Sender 3a und dem Ultraschall-Empfänger 3b so zu verändern bzw. einzustellen, daß jeweils das beste Meßergebnis erzielt wird, wobei der Winkel $\theta$ unverändert bleiben sollte.

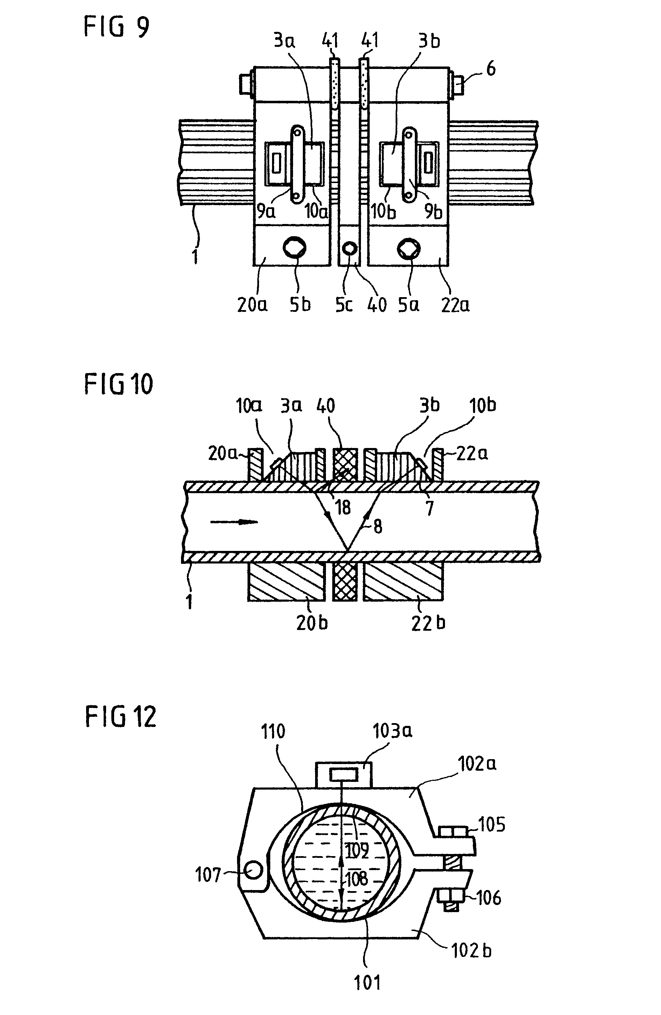

Die Figuren 9 und 10 zeigen eine Ausführungsform, die für unterschiedliche Leitungen geeignet ist. Der Ultraschall-Sender 3a ist in eine Durchgangsöffnung 10a eines Befestigungsteiles 20a eines ersten Paares Befestigungsteile und der Ultraschall-Empfänger 3a in eine Durchgangsöffnung 10b eines benachbarten Befestigungsteiles 22a eines weiteren Paares Befestigungsteile untergebracht. Die Befestigungsteile 20a und 22a sind scharnierartig mit dem jeweils zugeordneten anderen Befestigungsteil 20b bzw. 22b durch einen gemeinsamen Stift 6 verbunden. Die Befestigungsteile 20a und 20b sowie 22a und 22b sind miteinander durch Schrauben 5a, 5b und nicht dargestellte Muttern verspannt. Die Befestigungsteile 20a, 22a, 20b und 22b sind auf ihren der Leitung 1 zugewandten Seiten ähnlich ausgebildet wie die Befestigungsteile 2a und 2b nach den Figuren 1 bis 4. Die Befestigungsteile 20a und 20b sowie 22a und 22b können in axialer Richtung im Abstand voneinander durch Verschieben auf dem Stift 6 eingestellt werden. Nach ihrer Positionierung sind sie durch Abstandselemente 41 in ihrer Lage gehalten. Ein Ultraschall-Absorber 40 ist zwischen dem Ultraschall-Sender 3a und Ultraschall-Empfänger 3b angeordnet, um eine an der Außenwand der Leitung 1 reflektierte Ultraschallwelle 18 von dem Ultraschall-Empfänger 3b fernzuhalten. Der Ultraschall-Absorber 40 wird durch eine Befestigungsschraube 5c gegen die Leitung 1 gedrückt.

Ultraschall-Sender und -Empfänger können — wie bekannt — ihre Funktion tauschen, so daß der Empfänger zum Sender und der Sender zum Empfänger in jeweils abwechselnden Meßzeiten wird.

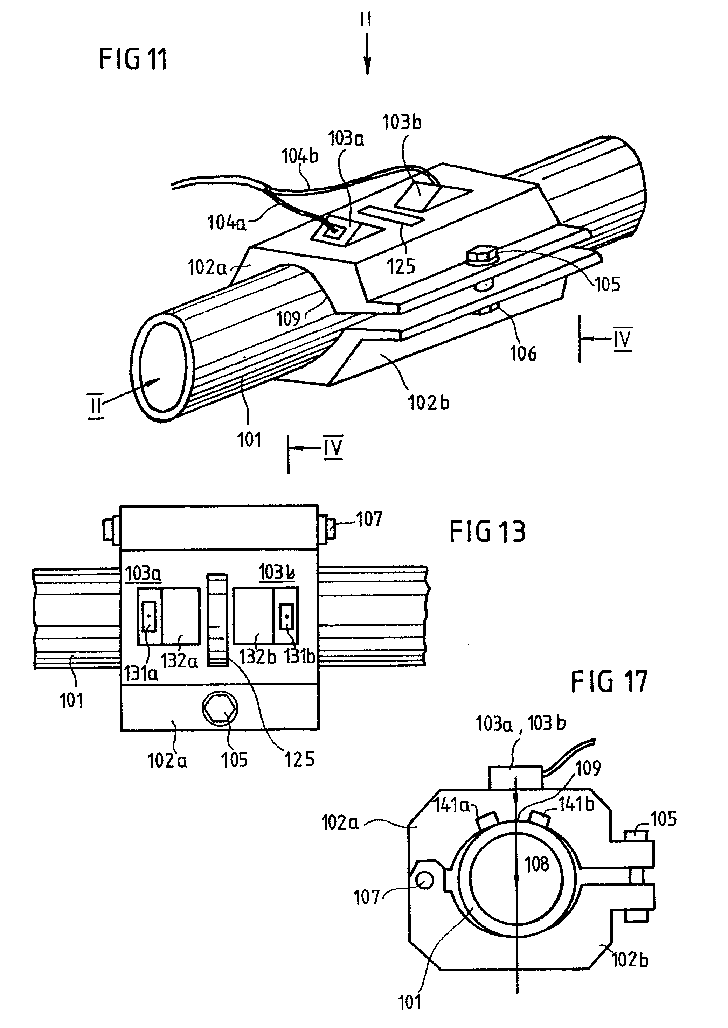

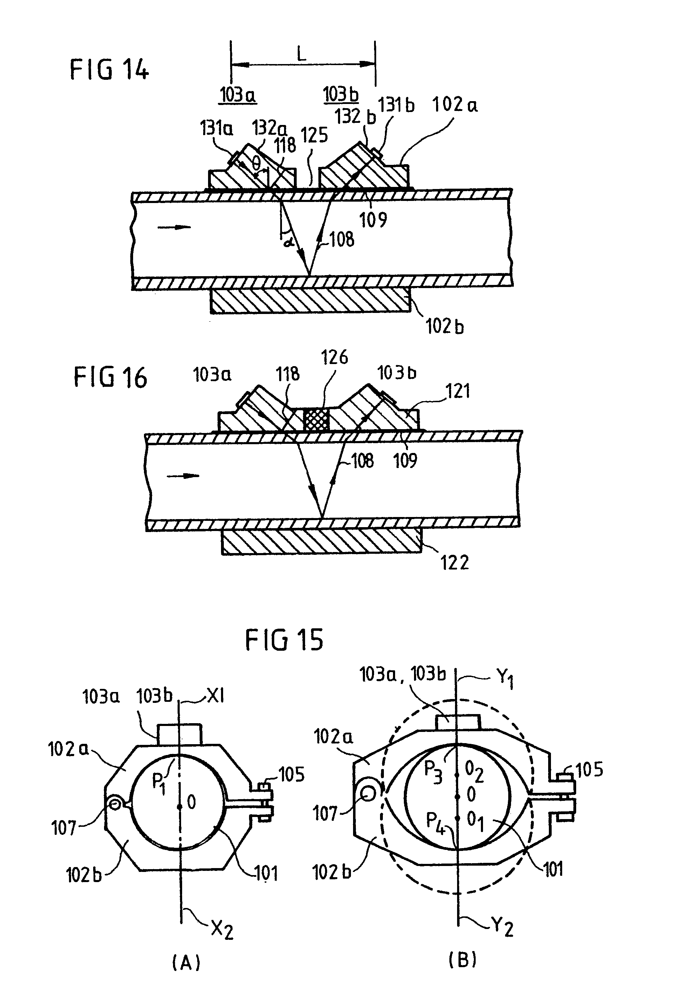

Das Ultraschall-Meßgerät nach den Figuren 11 bis 14 weist wiederum ein Paar Befestigungsteile 102a und 102b auf, um einen Ultraschall-Sender 103a und einen Ultraschall-Empfänger 103b außen an einer Leitung 101 anzubringen, die von dem zu messenden Medium durchströmt wird. Die Befestigungsteile 102a und 102b sind scharnierartig durch einen Stift 107 an ihrer einen Seite verbunden. Zur Anbringung des Meßgerätes werden die Befestigungsteile 102a und 102b an ihren freien Enden auseinandergeklappt und dann über die Leitung 101 geschoben, die demzufolge von den Befestigungsteilen 102a und 102b unter Bildung einer Schelle aufgenommen ist; danach werden die freien Enden mit einem Bolzen 105 und einer Mutter 106 verspannt, wodurch die Befestigungsteile 102a und 102b an der Leitung 101 befestigt sind. Der Ultraschall-Sender 103a und der Ultraschall-Empfänger 103b sind auf dem einen Befestigungsteil 102a befestigt. Ein Ultraschallimpuls wird von dem Ultraschall-Sender 103 durch die Strömung in der Leitung 101 gesendet und von der Innenwand der Leitung 101 zu dem Ultraschall-Empfänger 103b reflektiert, wobei der Impuls auf einem Weg 108 verläuft, die sich diametral durch die Leitung 101 nach Fig. 12 und schräg in bezug auf die Längsachse der Leitung erstreckt, wie dies in Fig. 14 gezeigt ist.

Der Ultraschall-Sender 103a enthält wiederum einen Ultraschall-Wandler 131a zur Umsetzung eines elektrischen Impulses von einer Übertragungsleitung 104a in einen Ultraschall-Impuls und einen keilförmigen Schuh 132a zur schrägen Einleitung der erzeugten Ultraschallwelle in die Strömung, die durch die Leitung 101 verläuft. Entsprechend ist der Ultraschall-Empfänger 103b mit einem keilförmigen Schuh 132b und einem Ultraschall-Wandler 131b ausgerüstet. Die Kontaktfläche zwischen dem Befestigungsteil 102a und der Leitung 101 ist hier doppelt so groß in bezug auf den Weg des Ultraschallimpulses. Zur besseren akustischen Kopplung zwischen dem Befestigungsteil 102a und der Leitung 101 dient wiederum ein akustisches Kopplungsmedium 109, das aus Fett, Epoxydharz oder einer Metallfolie bestehen kann. Das Befestigungsteil 102a hat auf seiner der Leitung 101 zugewandten Seite eine Kontaktfläche 110, die bogenförmig mit einem Radius gestaltet ist, der gleich oder größer als der Radius der Leitung 101 ist.

Um den Weg 8 für die Ultraschallwelle sicherzustellen, ist es wichtig, daß Ultraschall-Sender 103a und -Empfänger 103b genau zueinander ausgerichtet sind, d. h., daß sie mit hoher Präzision voneinander entfernt und aufeinander ausgerichtet sind.

Die Entfernung L zwischen Ultraschall-Sender 103a und -Empfänger 103b in Richtung parallel zur Leitungsachse kann leicht eingestellt werden, da die Befestigungsteile 102a und 102b scharnierartig miteinander verbunden sind. Wenn die Befestigungsteile 102a und 102b an der Leitung 101 befestigt werden, müssen Ultraschall-Sender 103 und -Empfänger 103b für die Ultraschallwelle einen Weg bereiten, der sich innerhalb der Leitung 101 in einer Ebene erstreckt, in der auch die Achse der Leitung 101 liegt; außerdem muß eine Kontaktfläche 110 des einen Befestigungsteiles 102a mit der Leitung 101 vorhanden sein, die im Wege der Ultraschallwelle liegt. Daher muß die Innenfläche 110 des Befestigungsteiles 102a im Hinblick auf den Durchmesser der Leitung 101 gewählt werden, wie dies in Fig. 15 gezeigt ist.

In Fig. 15(A) entspricht der Krümmungsradius der Innenfläche 110 im wesentlichen dem Radius der Leitung 101 und das akustische Kopplungsmedium 9 befindet sich in einem Berührungspunkt $P_1$ im Wege der Ultraschallwelle. Ultraschall-Sender 103a und -Empfänger 103b sollten auf dem Befestigungsteil 102a so angeordnet sein, daß ihre Mittenachsen $X_1$ und $X_2$ in einer Ebene mit dem Weg der Ultraschallwelle liegen, wobei diese Ebene durch die Mitte 0 der Leitung 101 verlaufen soll. Es ist aber auch möglich (siehe Fig. 15 [B]), den Krümmungsradius der Innenfläche 110 größer als den Radius der Leitung 101 zu wählen, wobei dann die Befestigungsteile 102a und 102b in Punkten $P_3$ und $P_4$ Kontakt mit der Leitung 101 haben, wobei diese Punkte im Wege der Ultraschallwelle liegen. Damit die Linien $Y_1$ und $Y_2$ des Weges der Ultraschallwelle zwischen dem Ultraschall-Sender 103a und -Empfänger 103b durch den Mittelpunkt 0 der Leitung 101 und die Punkte $P_3$ und $P_4$ verlaufen, müssen die Achsen $0_1$ und $0_2$ von Zylindern, die die Innenfläche 110 bilden, auf dieser Linie liegen, und die Entfernung zwischen den Befestigungsteilen 102a und 102b entlang dieser Linien muß so gewählt werden, daß sie mit dem äußeren Durchmesser der Leitung 101 übereinstimmt. Dies läßt sich dadurch erreichen, daß die Befestigungsteile 102a und 102b bei der Herstellung des Gerätes so ausgeführt werden, daß sich Ultraschall-Sender 103a und -Empfänger 103b in einem vorgegebenen Abstand voneinander befinden. Dann können die Befestigungsteile 102a und 102b in einfacher Weise an der Leitung 101 unter genauer gegenseitiger Positionierung lediglich durch Verspannen mittels Bolzen 105 und Schraube 106 befestigt werden.

Wenn Ultraschall-Sender 103a und -Empfänger 103b auf einer Seite der Leitung 101, d. h. auf einem Befestigungsteil, angebracht sind, kann eine unerwünschte Ultraschallwelle entstehen, die durch Reflexion der vom Ultraschall-Sender 103a ausgesandten Welle an der Außenwand der Leitung 101 gebildet ist; dies kann den Ultraschall-Empfänger 103b erreichen. Zur Vermeidung dieser Schwierigkeiten ist ein Spalt 125 zwischen Ultraschall-Sender 103a und -Empfänger 103b zur Reflexion der Ultraschallwelle 118 vorgesehen. In dem Spalt 125 kann ein Ultraschall-Absorber 126 zum Absorbieren der reflektierten Ultraschallwelle vorhanden sein, wie dies in Fig. 16 gezeigt ist.

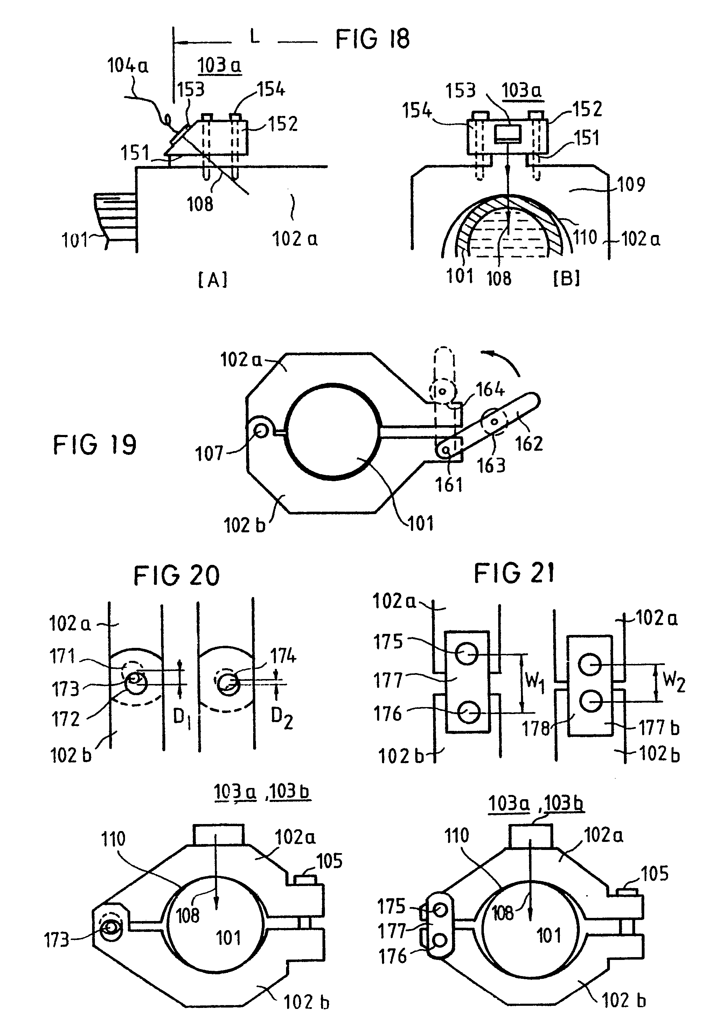

Fig. 17 zeigt ein Ausführungsbeispiel mit einer anders geformten Innenfläche des Befestigungsteiles 102a. In diesem Falle weist das Befestigungsteil 102a in seinem bogenförmig ausgestalteten Bereich Schlitze 141a und 141b auf, die zu beiden Seiten des Weges 108 der Ultraschallwelle liegen und damit die akustische Kopplungsfläche zwischen dem Befestigungsteil 102a und der Leitung 101 begrenzen; dadurch wird verhindert, daß die Ultraschallwelle gestreut wird oder rundumläuft.

Bei dem Ausführungsbeispiel nach Fig. 18 ist sowohl Ultraschall-Sender 103a als auch -Empfänger 103b (letzterer ist nicht dargestellt) in anderer Weise an dem Befestigungsteil angebracht. Hier sind keilförmiger Schuh 152 und Ultraschall-Wandler 153 getrennt von dem Befestigungsteil 102a hergestellt und mit diesem verschraubt sowie akustisch gekoppelt, indem über ein Zwischenmedium 151 eine Verschraubung mittels Bolzen 154 erfolgt.

Bei dem Ausführungsbeispiel nach Fig. 19 trägt das Befestigungsteil 102b einen schwenkbaren Arm 162, der auf einem Stift 161 gelagert ist. Der schwenkbare Arm ist mit einer Rolle 163 versehen. Das Befestigungsteil 102a hat eine Ausnehmung 164, die entsprechend der Rolle 163 bemessen ist. Wenn der schwenkbare Arm 162 bewegt wird zum Zwecke der Verspannung der Befestigungsteile 102a und 102b miteinander, greift die Rolle 163 in die Ausnehmung 164 ein.

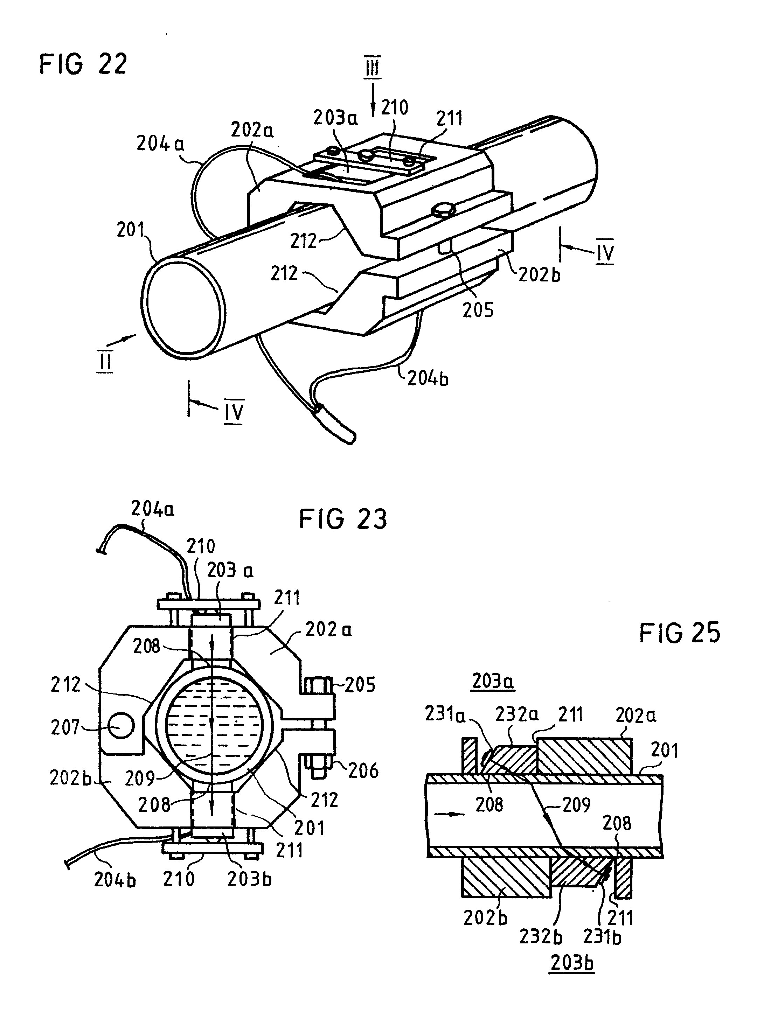

Die Geräte nach den Figuren 20 und 21 sind zur Anbringung an Leitungen geeignet, die unterschiedliche Durchmesser aufweisen. Deshalb haben diese beiden Ausführungen Einstelleinrichtungen zur Abstandsanpassung in einer Richtung quer zur Längsachse der Leitung. Wie Fig. 20 erkennen läßt, lassen sich in Bohrungen 171 und 172 Stifte 173 mit unterschiedlichen Durchmessern zur Bildung der scharnierartigen Verbindung einführen, so daß eine Anpassung an Leitungen 101 unterschiedlichen Durchmessers in einem Bereich möglich ist, der durch den Durchmesser der Bohrungen 171 und 172 sowie den Durchmesser des Stiftes 173 bestimmt ist. Bei dem Ausführungsbeispiel nach Fig. 21 sind in Bohrungen der Befestigungsteile 102a und 102b einander entsprechende Stifte 175 und 176 eingebracht, die auch Bohrungen in Abstandsteilen 177 und 178 durchsetzen. Die Abstandsteile 177 und 178 haben unterschiedliche Abmessungen $W_1$ und $W_2$ zwischen den Bohrungen, um eine Anpassung an unterschiedlich bemessene Leitungen zu erreichen.

Bei dem Ausführungsbeispiel nach den Figuren 22 bis 25 weist das Ultraschall-Meßgerät wiederum ein Paar Befestigungsteile 202a und 202b auf, um einen Ultraschall-Sender (erste Ultraschall-Wandlereinrichtung) 203a und einen Ultraschall-Empfänger (zweite Ultraschall-Wandlereinrichtung) 203b außen an einer Leitung 201 anzubringen, durch die die zu messende Strömung fließt. Die Befestigungsteile 202a und 202b sind wiederum scharnierartig durch einen Stift 207 an ihrer einen Seite verbunden. Bei der Anbringung des Meßgerätes sind die Befestigungsteile 202a und 202b auseinandergeklappt und dann um die Leitung 201 gelegt, so daß diese zwischen den Befestigungsteilen 202a und 202b unter Bildung einer Schelle aufgenommen ist; danach sind die Befestigungsteile an ihren freien Enden durch eine Schraube 205 und eine Mutter 206 unter Sicherung der Befestigungsteile 202a und 202b an der Leitung 201 miteinander verspannt. Die Befestigungsteile sind an ihrer der Leitung 201 zugewandten Seite wiederum bogenförmig ausgenommen, wie dies beispielsweise bereits im Zusammenhang mit der Figur 15 ausführlich beschrieben worden ist. Der Ultraschall-Sender 203a und der -Empfänger 203b sind in Durchgangslöchern 211 der Befestigungsteile 202a und 202b untergebracht und gegen die Leitung 201 mittels Druckelementen 210 gedrückt. Die Leitung 201 und der Ultraschall-Sender 203 und der Ultraschall-Empfänger 203 sind miteinander durch ein akustisches Kopplungsmedium 208 gekoppelt, das aus Fett, einem Epoxydkleber oder einer Metallfolie bestehen kann. Der Ultraschall-Sender 203 enthält wiederum einen Ultraschall-Wandler 231a, um einen elektrischen Impuls von einer Signalleitung 204a in einen Ultraschall-Impuls umzusetzen, sowie einen keilförmigen Schuh 232a, von dem die erzeugte Ultraschallwelle schräg in die Strömung geleitet wird, die Leitung 201 durchfließt. Entsprechend ist der Ultraschall-Empfänger 203 mit einem keilförmigen Schuh 232b ausgerüstet, auf dem der Ultraschall-Wandler 231b angebracht ist. Das von dem Ultraschall-Wandler 231b aufgenommene Signal wird als elektrisches Signal über eine Leitung 204b übertragen. Bei diesem Meßgerät bewegt sich die Ultraschallwelle auf einem Weg 209, der sich quer durch die Leitung 201 erstreckt und so verläuft, wie es in den Figuren 23 und 25 dargestellt ist.

Um diesen Verlauf der Ultraschallwelle zu erreichen, müssen der Ultraschall-Sender 203a und der Ultraschall-Empfänger 203b ganz genau zueinander ausgerichtet sein, weil davon die Genauigkeit der Messung abhängt.

Die Durchgangsöffnungen 211 in den Befestigungsteilen 201a und 202b, die den Ultraschall-Sender 203a und den Ultraschall-Empfänger 203b aufnehmen, können mit engem Spiel ausgeführt sein, so daß die Lage des Senders 203a und des Empfängers 203b davon abhängig ist. Im besonderen ist der axiale Abstand (vgl. Fig. 25) zwischen Sender 203a und Empfänger 203b durch die Lage der Durchgangsöffnungen 211 bestimmt, die im Hinblick auf den Durchmesser der Leitung 201 gewählt ist, da die Befestigungsteile 202a und 202b scharnierartig auf ihrer einen Seite miteinander verbunden sind. Der Ultraschall-Sender 203a und der Ultraschall-Empfänger 203b sind einander gegenüber bezüglich der Leitung 201 in einer geraden Linie angeordnet, die durch die Längsachse der Leitung 201 verläuft, wenn die Befestigungsteile an die Leitung 201 mit ihrer Innenfläche gedrückt sind.

Die Befestigungsteile können bei dem Ausführungsbeispiel nach den Figuren 22 bis 25 jeweils mit einer V-förmigen Ausnehmung auf ihrer jeweils der Leitung 201 zugewandten Seite versehen sein, wie dies bereits im Zusammenhang mit der Erläuterung des Ausführungsbeispiels nach Fig. 5 im einzelnen dargelegt worden ist.

Ferner können bei dem Ausführungsbeispiel nach den Figuren 22 bis 25 zur Anpassung an Leitungen mit unterschiedlichem Durchmesser die beiden Befestigungsteile 202a und 202b auf ihrer das Scharnier aufweisenden Seite in einer Art miteinander verbunden sein, wie dies bereits oben anhand der Figuren 20 und 21 erläutert worden ist.

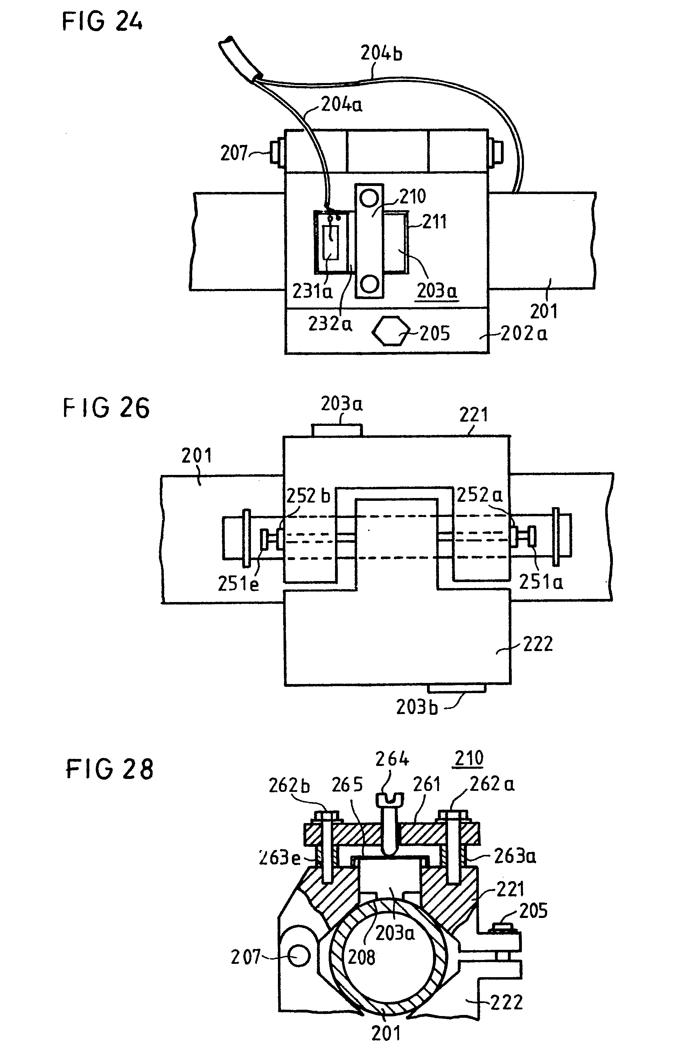

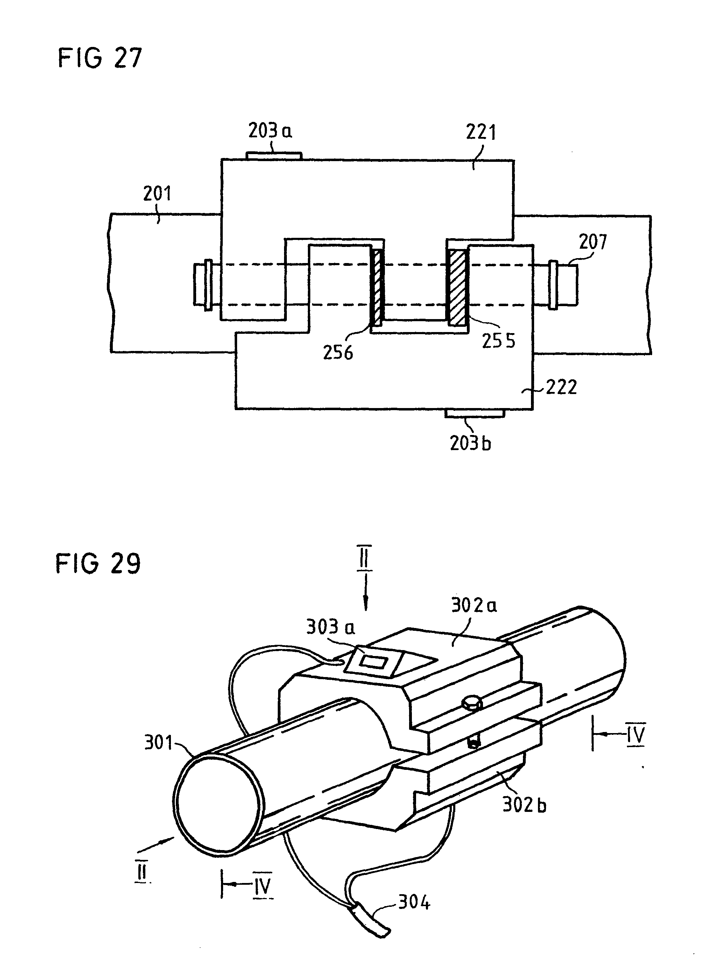

Bei den Ausführungsbeispielen nach den Figuren 26 und 27 ist eine axiale Einstellung des Abstandes der beiden Ultraschall-Wandlereinrichtungen im Hinblick auf den Anbau an Leitungen mit unterschiedlichem Durchmesser dargestellt. Um eine axiale Veränderung des Abstandes zwischen Sender und Empfänger vornehmen zu können, sind Befestigunsteile 221 und 222 kammartig an ihrer einen Seite ausgebildet und scharnierartig durch einen Stift 207 miteinander verbunden, wobei die beiden Befestigungsteile 221 und 222 in axialer Richtung in einer kleinen Distanz voneinander angeordnet sind. Sender und Empfänger werden hier in einer eingestellten Lage durch zwei Einstellschrauben 251a und 251b und Feststellmuttern 252a und 252b gehalten, wie dies in Fig. 26 gezeigt ist. Die Einstellung eines Abstandes zwischen Sender und Empfänger kann aber auch durch Abstandsstücke 255 und 256 vorgenommen werden, wie dies in Fig. 27 wiedergegeben ist. Mit einem Meßgerät dieser Ausführungen lassen sich Strömungen in Leitungen unterschiedlichen Durchmessers erfassen, wobei die Entfernung zwischen Sender und Empfänger nachjustiert werden kann, wenn dies für Messungen an unterschiedlichen Medien erforderlich ist.

In Fig. 28 ist eine Ausführung mit einem anderen Druckelement für einen Ultraschall-Sender 203a gezeigt. Der Ultraschall-Sender 203 wird mittels eines Druckbolzens 264 gegen die Leitung 201 gepreßt, wobei der Bolzen 264 von einem Druckelement in Form einer Platte 261 getragen ist, die an einer Seite des Befestigungsteiles 221 mit Bolzen 262a und 262b über Abstandsstücke 263a und 263b befestigt ist. Mit diesem Aufbau kann der Ultraschall-Sender 203a und auch der nicht dargestellte Empfänger gegen die Leitung 201 mit einer verhältnismäßig großen Kraft gepreßt werden, so daß eine Metallfolie als akustisches Kopplungsmedium 208 benutzt werden kann, das für eine akustische Kopplung zwischen dem Sender und der Leitung sorgt. Eine Blattfeder 265 kann dem Ultraschall-Sender 203 zugeordnet sein, um letzteren in einer Richtung von der Leitung 201 wegzudrücken, wenn er nicht durch den Druckbolzen 264 niedergedrückt ist. Beim Anziehen des Druckbolzens 264 wird der Ultraschall-Sender 203a gegen die Leitung 201 unter Überwindung der Gegenkraft der Blattfeder 265 gedrückt. Demgemäß ist das akustische Kopplungsmedium 208, das dem Sender und dem Empfänger zugeordnet ist, vor Staub, Abblättern oder Beschädigung geschützt, solange Sender und Empfänger nicht an der Leitung 201 angebracht sind.

Das Verspannen der Befestigungsteile 221 und 222 miteinander kann in Abweichung von der Darstellung in Fig. 28 auch so erfolgen, wie es im Zusammenhang mit der Figur 19 bereits erläutert worden ist.

Ebenso können die Durchgangsöffnungen in den Befestigungsteilen 221 und 222 sowie Ultraschall-Sender und Ultraschall-Empfänger so gestaltet sein, wie es bereits anhand der Figur 8 erklärt worden ist.

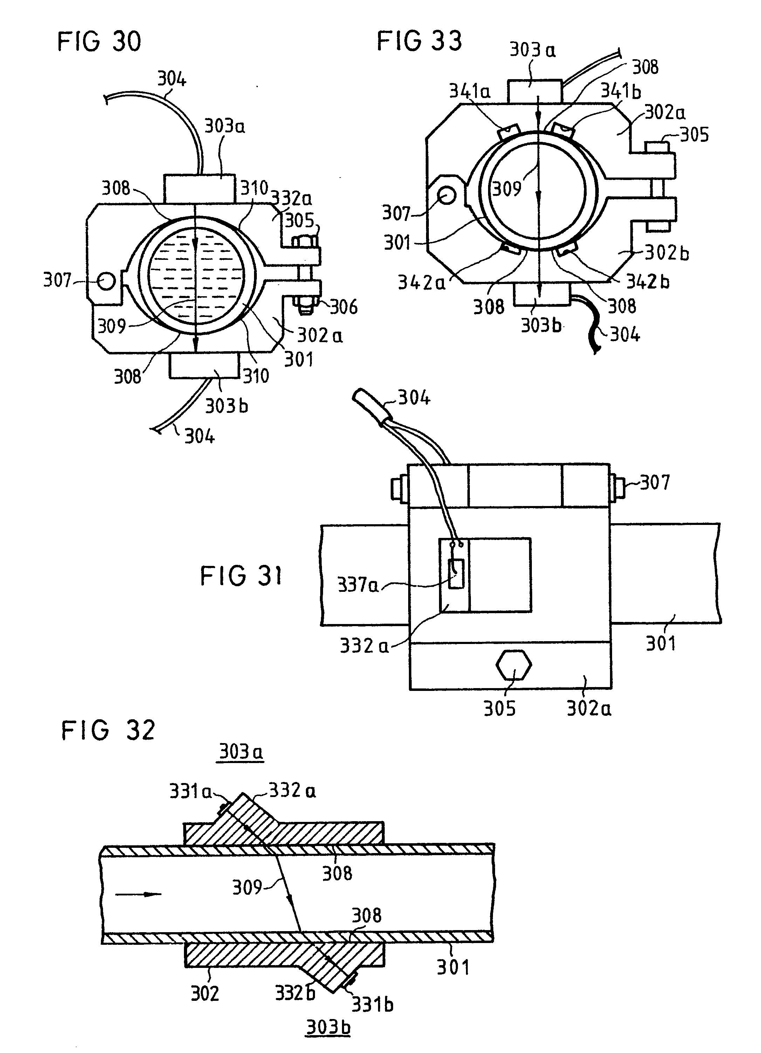

Bei dem Ausführungsbeispiel nach den Figuren 29 bis 32 ist wiederum ein Paar Befestigungsteile 302a und 302b zur Anbringung von einem Ultraschall-Sender (erste Ultraschall-Wandlereinrichtung) 303a und einem Ultraschall-Empfänger (zweite Ultraschall-Wandlereinrichtung) 303b außen an einer Leitung 301 vorgesehen, in der die zu messende Strömung fließt. Die Befestigungsteile 302a und 302b sind wiederum auf ihrer einen Seite mittels eines Stiftes 307 scharnierartig miteinander verbunden. Die Anbringung der Befestigungsteile an der Leitung erfolgt in derselben Weise, wie es oben bereits wiederholt beschrieben worden ist. Bei diesem Ausführungsbeispiel ist der Ultraschall-Sender 303a auf dem einen Befestigungsteil 302a und der Ultraschall-Empfänger 303b auf dem anderen Befestigungsteil 302b angebracht. Ein Ultraschallimpuls wird vom Sender 303a durch die Strömung in der Leitung 301 zu dem Empfänger 303b auf einem Wege 309 gesandt, dessen Verlauf aus den Figuren 30 und 32 ersichtlich ist. Sowohl der Ultraschall-Sender 303a wie auch der Ultraschall-Empfänger 303b sind so aufgebaut, wie es oben bereits wiederholt erläutert worden ist. Auch hier weisen die Befestigungsteile 302a und 302 b Ausnehmungen auf ihrer der Leitung 301 zugewandten Seite dergestalt auf, daß eine Berührung mit der Leitung 301 im Bereich des Weges der Ultraschallwelle gegeben ist. Auch hier sind ferner wiederum zur Verbesserung der akustischen Kopplung Fett, Epoxydharzkleber oder Metallfolien als akustisches Kopplungsmedium 309 verwendet. Ferner ist auch hier der Sender 303a bezüglich des Empfängers 303b so ausgerichtet, wie es oben erklärt worden ist.

Der Abstand zwischen dem Ultraschall-Sender 303a und dem Ultraschall-Empfänger 303b in Richtung parallel zur Achse der Leitung 301 kann in einfacher Weise eingestellt werden, da die Befestigungsteile 302a und 302b scharnierartig auf einer Seite miteinander verbunden sind.

Wenn die Befestigungsteile 302a und 302b an der Leitung 301 befestigt sind, ist es notwendig, daß Sender 303a und Empfänger 303b einen Weg für die Ultraschallwelle sicherstellen, wie er oben beschrieben ist. Daher weisen die Befestigungsteile 302a und 302b auf ihrer der Leitung 301 jeweils zugewandten Seite derart gestaltete Oberflächen 310 auf, daß sie im Bereich des Weges der Ultraschallwelle die Leitung 301 berühren. Aus diesem Grunde müssen die Innenflächen 310 der Befestigungsteile 302a und 302b im Hinblick auf einen vorgegebenen Durchmesser der Leitung gestaltet und dimensioniert sein, wie es beispielsweise in der oben bereits behandelten Fig. 15 dargestellt ist.

Fig. 33 zeigt eine anders gestaltete Innenfläche der Befestigungsteile 302a und 302b; hier weisen nämlich die Befestigungsteile Schlitze 341a und 341b sowie 342a und 342b auf, die beiderseits des Weges 309 der Ultraschallwelle vorgesehen sind und somit eine Fläche der akustischen Kopplung zwischen den Befestigungsteilen 302a und 302b sowie der Leitung 301 begrenzen, wodurch eine Streuung oder ein Umlauf der Ultraschallwelle verhindert ist.

Die Ultraschall-Wandlereinrichtungen können auch bei dem Ausführungsbeispiel nach den Figuren 29 bis 32 in einer Weise an den Befestigungsteilen angebracht sein, wie es aus Fig. 18 hervorgeht.

Ferner kann auch bei diesem Ausführungsbeispiel zum Verspannen der beiden Befestigungsteile eine Vorrichtung benutzt werden, wie sie in Fig. 19 gezeigt ist.

Darüber hinaus ist anzumerken, daß zur Anpassung an Leitungen mit unterschiedlichen Durchmessern der Abstand zwischen den Befestigungsteilen an der eine scharnierartige Verbindung aufweisenden Seite in der Weise vorgenommen werden kann, wie dies anhand der Figuren 20 und 21 erklärt worden ist.

Ferner kann bei dem Ausführungsbeispiel nach den Figuren 29 bis 32 eine axiale Einstellmöglichkeit von Sender zu Empfänger mit einer Ausbildung der Befestigungsteile vorgesehen sein, wie es im Zusammenhang mit den Figuren 26 und 27 erläutert worden ist.

Abschließend ist noch hervorzuheben, daß bei Verwendung einer Metallfolie als akustisches Kopplungsmedium das erfindungsgemäße Meßgerät den besonderen Vorteil aufweist, daß es auch bei Temperaturen über 250°C einwandfrei arbeitet.

**Patentansprüche**

1. Ultraschall-Meßgerät zur Bestimmung der Strömung eines Mediums in einer Leitung mit einer außen an der Leitung montierbaren Baueinheit mit einer ersten Ultraschall-Wandlereinrichtung und einer zweiten Ultraschall-Wandlereinrichtung, wobei die Baueinheit mindestens ein Paar von die Ultraschall-Wandlereinrichtungen tragenden Befestigungsteilen enthält, wobei ferner jede Ultraschall-Wandlereinrichtung aus einem keilförmigen Schuh und einem daran befestigten Ultraschall-Wandler in einer derartigen Anordnung an dem betreffenden Befestigungsteil besteht, daß die Ausbreitung der Ultraschallwelle jeweils entlang einer dem betreffenden Ultraschall-Wandler zugeordneten zentralen Achse schräg zur Mittenachse der Leitung erfolgt, und wobei die Befestigungsteile mit den Ultraschall-Wandlereinrichtungen an ihren der Leitung zugewandten Seiten so geformt sind, daß in der von den zentralen Achsen der Ultraschall-Wandler gebildeten Ebene auch die Mittenachse der Leitung liegt, dadurch gekennzeichnet, daß die Befestigungsteile (2a, 2b) die Leitung (1) unter Bildung einer Schelle zwischen sich aufnehmen und daß die Befestigungsteile (2a, 2b) auf ihrer einen Seite scharnierartig miteinander verbunden und auf ihrer gegenüberliegenden anderen Seite miteinander verspannt sind.

2. Meßgerät nach Anspruch 1, dadurch gekennzeichnet, daß an einem Befestigungsteil (2a) beide Ultraschall-Wandler (31a, 31b) mit ihren keilförmigen Schuhen (32a, 32b) angeordnet sind.

3. Meßgerät nach Anspruch 1, dadurch gekennzeichnet, daß an dem einen Befestigungsteil (202a) der eine Ultraschall-Wandler (231a) mit keilförmigem Schuh (232a) und an dem anderen Befestigungsteil (202b) der zweite Ultraschall-Wandler (231b) mit keilförmigem Schuh (232b) angebracht ist.

4. Meßgerät nach Anspruch 1, dadurch gekennzeichnet, daß die Baueinheit ein weiteres Paar von Befestigungsteilen (22a, 22b) enthält, das in Achsrichtung der Leitung (1) neben dem einen Paar von Befestigungsteilen (20a, 20b) angeordnet ist, daß an einem Befestigungsteil (20a) des einen Paares ein Ultraschall-Wandler mit keilförmigen Schuh und an einem benachbarten Befestigungsteil (22a) des weiteren Paares der andere Ultraschall-Wandler mit keilförmigem Schuh angeordnet ist und daß zwischen den Paaren von Befestigungsteilen (20a, 20b; 22a, 22b) Abstandselemente (41) angeordnet sind.

5. Meßgerät nach einem der vorangehenden Ansprüche, dadurch gekennzeichnet, daß die Ultraschall-Wandler (131a, 131b) mit ihren keilförmigen Schuhen (132a, 132b) an der von der Leitung (101) abgewandten Seite des sie tragenden Befestigungsteils (102a) angebracht sind.

6. Meßgerät nach einem der Ansprüche 2 bis 4, dadurch gekennzeichnet, daß in dem Ultraschall-Wandler (31a, 31b) aufweisenden Befestigungsteil (2a) Durchgangsöffnungen (10a, 10b) zur Aufnahme der Ultraschall-Wandler (31a, 31b) mit ihren keilförmigen Schuhen (32a, 32b) vorhanden sind und daß die Ultraschall-Wandler (31a, 31b) mittels Druckelementen (9a, 9b) gegen die Leitung (1) gepreßt sind.

7. Meßgerät nach Anspruch 6, dadurch gekennzeichnet, daß die Durchgangsöffnungen (10a, 10b) und die Ultraschall-Wandlereinrichtungen (3a, 3b) einen vieleckigen Querschnitt aufweisen.

8. Meßgerät nach Anspruch 6, dadurch gekennzeichnet, daß die Durchgangsöffnungen (10a) und die Ultraschall-Wandlereinrichtungen (3a) einen runden Querschnitt haben und daß die Durchgangsöffnungen (10a) Schlitze (84) und die Ultraschall-Wandlereinrichtungen (3a) entsprechend bemessene Ansätze (83) aufweisen.

9. Meßgerät nach einem der vorausgehenden Ansprüche, dadurch gekennzeichnet, daß jeweils mindestens das einen Ultraschall-Wandler (31a) aufweisende Befestigungsteil (2a) auf seiner der Leitung (1) zugewandten Seite eine V-förmige Ausnehmung aufweist, die symmetrisch zu der von den zentralen Achsen der Ultraschall-Wandler (31a, 31b) gebildeten Ebene liegt.

10. Meßgerät nach Anspruch 1 oder 2 und einem der Ansprüche 4 bis 9, dadurch gekennzeichnet, daß zwischen den Ultraschall-Wandlern (31a, 31b) ein Ultraschall-Absorber (17) liegt.

11. Meßgerät nach Anspruch 2 und 10, dadurch gekennzeichnet, daß das eine Befestigungsteil (2a) zwischen den Ultraschall-Wandlern (31a, 31b) eine Ausnehmung aufweist, in der der Ultraschall-Absorber (17) untergebracht ist.

12. Meßgerät nach einem der vorausgehenden Ansprüche, dadurch gekennzeichnet, daß die Befestigungsteile (2a, 2b) an einer Seite durch einen Stift (6) scharnierartig miteinander verbunden sind, der fluchtende Durchgangslöcher der Befestigungsteile (2a, 2b) durchsetzt.

13. Meßgerät nach den Ansprüchen 4 und 12, dadurch gekennzeichnet, daß die zwei Paar Befestigungsteile (20a, 20b; 22a, 22b) mittels des Stiftes (6) scharnierartig miteinander verbunden sind und daß die Abstandselemente (41) auf dem Stift gehalten sind.

14. Meßgerät nach Anspruch 12 oder 13, dadurch gekennzeichnet, daß der Stift (173) in seinem Durchmesser in Abhängigkeit von dem Durchmesser der Leitung (101) gewählt ist.

15. Meßgerät nach einem der Ansprüche 1 bis 11, dadurch gekennzeichnet, daß die Befestigungsteile (2a, 2b) auf ihrer einen Seite über ein Abstandsteil (177) miteinander verbunden sind.

16. Meßgerät nach Anspruch 3 oder in Verbindung von Anspruch 3 mit einem der Ansprüche 5 bis 9 sowie 12, 14 und 15, dadurch gekennzeichnet, daß die Befestigungsteile (221, 222) auf ihrer einen Seite mit der scharnierartigen Verbindung kammartig und mit in axialer Richtung einstellbarem Abstand ineinandergreifen.

17. Meßgerät nach Anspruch 16, adurch gekennzeichnet, daß der Abstand mittels Abstandsstücken (255, 256) eingestellt ist, die auf einen zur Bildung der scharnierartigen Verbindung benutzten Stift (207) aufgeschoben sind.

18. Meßgerät nach Anspruch 16, dadurch gekennzeichnet, daß der Abstand mittels eines Befestigungsteils (221) im Bereich der scharnierartigen Verbindung durchsetzender Einstellschrauben (251a, 251b) eingestellt ist.

19. Meßgerät nach einem der vorhergehenden Ansprüche, dadurch gekennzeichnet, daß die Befestigungsteile (2a, 2b) an ihrer anderen Seite mittels Schraube und Mutter (5) miteinander verspannt sind.

20. Meßgerät nach einem der Ansprüche 1 bis 18, dadurch gekennzeichnet, daß ein Befestigungsteil (102b) an seiner anderen Seite einen schwenkbaren Arm (162) mit einer Rolle (163) trägt, die das zugeordnete andere Befestigungsteil (102a) an seiner anderen Seite außen übergreift und dort in einer Ausnehmung (164) einrastet.

## Claims

1. An ultrasonic measuring device for determining the flow of a medium in a pipeline by a structural unit mounted externally on the pipeline and comprising a first ultrasonic transducer device, a second ultrasonic transducer device and at least one pair of fixing components which support the ultrasonic transducer devices, where moreover each ultrasonic transducer device consists of a wedge-shaped shoe with an ultrasonic transducer attached thereto and arranged on its fixing component in such manner that an ultrasonic wave is propatated along a central axis assigned to the respective ultrasonic transducer, transversely to the central axis of the pipeline, and the fixing components with the ultrasonic transducer devices have their sides facing towards the pipeline shaped in such manner that the central axis of the pipeline is also arranged in the plane formed by the central axes of the ultrasonic transducers, characterised in that the fixing components (2a, 2b) accommodate the pipeline (1) between themselves to form a clamp, and that at one side the fixing components (2a, 2b) are hinged together and are braced together at the opposite side.

2. A measuring device as claimed in Claim 1, characterised in that both the ultrasonic transducers (31a, 31b), with their wedge-shaped shoes (32a, 32b), are arranged on one fixing component (2a).

3. A measuring device as claimed in Claim 1, characterised in that the first ultrasonic transducer (231a) with its wedge-shaped shoe (232a) is arranged on the first fixing component (202a), whereas the second ultrasonic transducer (231b) with its wedge-shaped shoe (232b) is arranged on the other fixing component (202b).

4. A measuring device as claimed in Claim 1, characterised in that the structural unit contains a further pair of fixing components (22a, 22b) arranged in the axial direction of the pipeline (1) next to the one pair of fixing components (20a, 20b), that one ultrasonic transducer with its wedge-shaped shoe is arranged on the one fixing component (20a) of the first pair, and the other ultrasonic transducer with its wedge-shaped shoe is arranged on an adjacent fixing component (22a) of the other pair, and that spacing elements (41) are arranged between the pairs of fixing components (20a, 20b; 22a, 22b).

5. A measuring device as claimed in one of the preceding Claims, characterised in that the ultrasonic transducers (131a, 131b), with their wedge-shaped shoes (132a, 132b), are arranged on the fixing component (102a) by which they are supported on that side which faces away from the pipeline (101).

6. A measuring device as claimed in one of Claims 2 to 4, characterised in that the fixing component (2a) which prossesses the ultrasonic transducers (31a, 31b) contains through-bores (10a, 10b) which serve to accommodate the ultrasonic transducers (31a, 31b) together with their wedge-shaped shoes (32a, 32b), and that the ultrasonic transducers (31a, 31b) are pressed against the pipeline (1) by means of pressure elements (9a, 9b).

7. A measuring device as claimed in Claim 6, characterised in that the through-bores (10a, 10b) and the ultrasonic transducer devices (3a, 3b) posses a polygonal cross-section.

8. A measuring device as claimed in Claim 6, characterised in that the through-bores (10a) posses a round cross-section, the through-bores (10a) posses slots (84), and the ultrasonic transducer devices (3a) posses correspondingly dimensioned projections (83).

9. A measuring device as claimed in one of the preceding Claims, characterised in that in each case at least the fixing component (2a) which possesses an ultrasonic transducer (31a) possesses in its side facing towards the pipeline (1) a V-shaped recess which is symmetrical to the plane formed by the central axes of the ultrasonic transducers (31a, 31b).

10. A measuring device as claimed in Claim 1 or 2 and one of Claims 4 to 9, characterised in that an ultrasonic absorber (17) is arranged between the ultrasonic transducers (31a, 31b).

11. A measuring device as claimed in Claim 2 and 10, characterised in that between the ultrasonic transducers (31a, 31b) the one fixing component (2a) possesses a recess in which the ultrasonic absorber (17) is accommodated.

12. A measuring device as claimed in one of the preceding Claims, characterised in that the fixing components (2a, 2b) are hinged to one another on one side by means of a pin (6) which passes through aligned through-bores in the fixing components (2a, 2b).

13. A measuring device as claimed in Claims 4 and 12, characterised in that the two pairs of fixing components (20a, 20b; 22a, 22b) are hinged to one another by means of the pin (6), and that the spacing elements (41) are supported on the pin.

14. A measuring device as claimed in Claim 12 or 13, characterised in that the diameter of the pin (173) is selected in dependence upon the diameter of the pipeline (101).

15. A measuring device as claimed in one of Claims 1 to 11, characterised in that the fixing components (2a, 2b) are connected to one another on their one side by means of a spacing component (177).

16. A measuring device as claimed in Claim 3, or in Claim 3 in combination with one of Claims 5 to 9 as well as 12, 14 and 15, characterised in that on their one side the fixing components (221, 222) engage with one another by means of a hinged connection in the manner of inter-digitated combs with a spacing which is adjustable in the axial direction.

17. A measuring device as claime in Claim 16, characterised in that the spacing is set by means of spacing components (255, 256) which are placed on to a pin (207) which is used to form the hinged connection.

18. A measuring device as claimed in Claim 16, characterised in that the spacing is set by means of adjusting screws (251a, 251b) which pass through a fixing component (221) in the region of the hinged connection.

19. A measuring device as claimed in one of the preceding Claims, characterised in that on their other side the fixing components (2a, 2b) are braced to one another by means of a screw and a nut (5).

20. A measuring device as claimed in one of Claims 1 to 18, characterised in that on its other side one fixing component (102b) bears a pivotable arm (162) with a roller (163) which externally engages over the assigned other fixing component (102a) on its remote side and is located in a recess (164).

**Revendications**

1. Appareil de mesure aux ultrasons pour déterminder le courant d'un milieu dans un conduit, avec une unité de construction avec un premier dispositif convertisseur ultrasonore et avec un second dispositif convertisseur ultrasonore et susceptible d'être montée extérieurement sur le conduit, ladite unité de construction comportant au moins une paire d'éléments de fixation portant les dispositifs convertisseurs ultrasonores, alors, qu'en outre, chaque dispositif convertisseur ultrasonore est constitué par un patin conéiforme et par un convertisseur ultrasonore fixé à ce dernier, avec un agencement tel sur l'élément de fixation concerné que la propagation de l'onde ultrasonore respective a lieu le long d'un axe central associé au convertisseur ultrasonore concerné, obliquement par rapport à l'axe médian du conduit, et que les éléments de fixation sont, avec les dispositifs convertisseurs ultrasonores, conformés, sur leurs côtés qui sont voisins du conduit, de telle façon que dans le plan formé par les axes centraux de convertisseurs ultrasonores, se situe également l'axe médian du conduit, caractérisé par le fait que les éléments de fixation (2a, 2b) reçoivent entre eux le conduit (1) en formant un collier, et que les éléments de fixation (2a, 2b) sont reliés sur l'un de leurs côtés à la manière d'une charnière et sont bloqués l'un contre l'autre sur leurs côtés opposés.

2. Appareil de mesure selon la revendication 1, caractérisé par le fait que sur un élément de fixation (2a) sont disposés les deux convertisseurs ultrasonores (31a, 31b), avec leurs patins conéiformes (32a, 32b).

3. Appareil de mesure selon la revendication 1, caractérisé par le fait que sur ledit élément de fixation (202a) est disposé le convertisseur ultrasonore (231a), par son patin conéiforme (232a), alors que sur l'autre élément de fixation (202b) est fixé le second convertisseur ultrasonore (231b), par son patin conéiforme (232b).

4. Appareil de mesure selon la revendication 1, caractérisé par le fait que l'unité de construction comporte une seconde paire d'éléments de fixation (22a, 22b) qui est disposée, dans la direction axiale du conduit (1), près de la première paire d'éléments de fixation (20a, 20b), qu'à un élément de fixation (20a) de la première paire est disposé un convertisseur ultrasonore à patin cunéiforme et qu'à un élément de fixation voisin (29a) de la seconde paire est fixé le second convertisseur ultrasonore à patin conéiforme, et qu'entre les paires d'éléments de fixation (20a, 20b; 22a, 22b), sont disposés des éléments d'entretoise (41).

5. Appareil de mesure selon l'une des revendications précédentes, caractérisé par le fait que les convertisseurs ultrasonores (131a, 131b) sont disposés, par leurs patins conéiformes (132a, 132b), sur le côté de l'élément de fixation (102a) qui les porte, qui est éloigné du conduit (101).

6. Appareil de mesure selon l'une des revendications 2 à 4, caractérisé par le fait que dans l'élément de fixation (2a) qui comporte des transducteurs ultrasonores (31a, 31b), sont prévus des ouvertures de passage (10a, 10b) destinées à recevoir les transducteurs ultrasonores (31a, 31b), par leurs patins conéiformes (32a, 32b), et que les transducteurs ultrasonores (31a, 31b) sont appliqués, à l'aide d'éléments de pression (9a, 9b) contre le conduit (1).

7. Appareil de mesure selon la revendication 6, caractérisé par le fait que les ouvertures de passage (10a, 10b) et les dispositifs transducteurs ultrasonores (3a, 3b) présentent une section transversale polygonale.

8. Appareil de mesure selon la revendication 6, caractérisé par le fait que les ouvertures de passage (10a) et les dispositifs transducteurs ultrasonores (3a) possèdent une section transversale ronde, et que les ouvertures de passage (10a) présentent des fentes (84) alors que les dispositifs transducteurs ultrasonores (3a) possèdent des appendices (83) dimensionnés de façon correspondante.

9. Appareil de mesure selon l'une des revendications précédentes, caractérisé par le fait que, respectivement, au moins l'un (2a) des éléments de fixation comportant un transducteur ultrasonore (31a), comporte sur son côté qui est voisin du conduit (1), une ouverture en forme de V qui se situe symétriquement par rapport au plan qui est défini par les axes centraux des transducteurs ultrasonores (31a, 31b).

10. Appareil de mesure selon la revendication 1 ou 2, et selon l'une des revendications 4 à 9, caractérisé par le fait qu'entre les transducteurs ultrasonores (31a, 31b) est situé un absorbeur ultrasonore (17).

11. Appareil de mesure selon les revendications 2 et 10, caractérisé par le fait que l'élément de fixation (2a) présente, entre les transducteurs ultrasonores (31a, 31b), une ouverture dans laquelle est logé l'absorbeur ultrasonore (17).

12. Appareil de mesure selon l'une des revendications précédentes, caractérisé par le fait que les éléments de fixation (2a, 2b) sont reliés, sur un côté, par une cheville (6), à la manière d'une charnière, laquelle cheville passe par des ouvertures de passage alignées des éléments de fixation (2a, 2b). 13. Appareil de mesure selon les revendications 4 et 12, caractérisé par le fait que les deux paires d'éléments de fixation (20a, 20b; 22a, 22b) sont reliées entre elles, à la manière d'une charnière, au moyen de la cheville (6), et que les éléments d'entretoise (41) sont maintenus sur la cheville.

14. Appareil de mesure selon la revendication 12 ou 13, caractérisé par le fait que le diamètre de la cheville (173) est choisi en fonction du diamètre du conduit (101).

15. Appareil de mesure selon l'une des revendications 1 à 11, caractérisé par le fait que les éléments de fixation (2a, 2b) sont reliés entre eux, sur l'un de leurs côtés, par l'intermédiaire d'un élément d'entretoise (177').

16. Appareil de mesure selon la revendication 3 ou en liaison de la revendications 5 à 9, de même que 12, 14 et 15, caractérisé par le fait que les éléments de fixation (221, 222) s'interpénètrent, à la manière de peignes, sur un de leurs côtés, avec la liaison en forme de charnière, et s'interpénètrent avec une distance réglable en direction axiale.

17. Appareil de mesure selon la revendication 16, caractérisé par le fait que la distance est réglée à l'aide de pièces d'entretoise (255, 256) qui sont glissées sur une cheville (207) utilisée pour former la liaison en forme de charnière.

18. Appareil de mesure selon la revendication 16, caractérisé par le fait que la distance est réglée à l'aide de vis de réglage (251a, 251b) qui s'étendent à travers un élément de fixation (221), dans la zone qui intéresse la liaison en forme de charnière.

19. Appareil de mesure selon l'une des revendications précédentes, caractérisé par le fait que les éléments de fixation (2a, 2b) sont serrés, sur leur autre côté, à l'aide d'une vis et d'un écrou (5).

20. Appareil de mesure selon l'une des revendications 1 à 18, caractérisé par le fait qu'un élément de fixation (102b) porte, sur son autre côté, un bras articulé (162) pourvu d'un galet (163) qui s'étend extérieurement ou au-dessus du côté extérieur de l'autre élément de fixation associé (102a) et qui s'y enclenche dans une ouverture (164).

FIG 1

FIG 2

FIG 3

FIG 4

FIG 5

FIG 6

FIG 7

FIG 8

FIG 9

FIG 10

FIG 12

FIG 11

II

FIG 13

FIG 17

FIG 14

FIG 16

FIG 15

(A)            (B)

FIG 18

[A]

[B]

FIG 19

FIG 20

FIG 21

103a, 103b

103a, 103b

**FIG 22**

**FIG 23**

**FIG 25**

**FIG 24**

**FIG 26**

**FIG 28**

27

## FIG 27

## FIG 29

FIG 30

FIG 33

FIG 31

FIG 32